Europäisches Patentamt

European Patent Office

Office européen des brevets

(11) Publication number: 0 215 969
A1

# EUROPEAN PATENT APPLICATION

(21) Application number: 85111996.6

(22) Date of filing: 21.09.85

(51) Int. Cl.⁴: H02H 3/02 , H02H 3/33

(43) Date of publication of application:
01.04.87 Bulletin 87/14

(84) Designated Contracting States:
DE FR GB

(71) Applicant: MOTORI ELETTRICI ROTOS S.p.A
Viale Cinque Giornate 1120
I-21042 Caronno Pertusella (Varese)(IT)

(72) Inventor: Mazzucchelli, Attilio
Via Montenero 22
I-21040 Venegono Superiore Varese(IT)
Inventor: Dossena, Luigi
Via Bagatti Valsecchi 8
I-20070 Cavenago d'Adda Milano(IT)
Inventor: Marchesi, Emiliano
Via Benedetto Croce 4
I-20075 Lodi Milano(IT)

(74) Representative: de Dominicis, Riccardo et al
de Dominicis & Partners S.a.s. Via Brera, 6
I-20121 Milano(IT)

(54) A ciruit arrangement for sensing, transmitting, and processing information of the occurrence of a variation in a parameter of AC electric equipment to be monitored.

(57) A circuit arrangement for sensing information of the occurrence of a variation in a parameter to be monitored, such as the temperature, of an AC electric machine (2) to be monitored, as well as for transmitting said information and utilising it to produce a warning of malfunction, in turn issuing a warning and causing the facility (2) being monitored to be cut off its power supply network (4).

As the information, use is made of the passage of a homopolar current (Io) through a circuit comprising leads (4a,4b,4c) included with the power supply network (4) and/or protection system for the facility (2) being monitored. That circuit is embodied by connecting between one phase lead (4a,4b,4c) and the network (4) ground neutral (13), or neutral of the machine (2) being monitored, a homopolar current actuator (3). A transducer (6) surrounding the leads (4a,4b,4c) of the AC network (4) phases senses the homopolar current (Io) flowing through one phase lead, which unbalances the summation of the phase currents and generates a signal which, through a receiver element (7), causes the power supply circuit (4) to the facility (2) to open or warns of the variation occurred in the parameter being monitored.

Fig.1

# A CIRCUIT ARRANGEMENT FOR SENSING, TRANSMITTING, AND PROCESSING INFORMATION OF THE OCCURRENCE OF A VARIATION IN A PARAMETER OF AC ELECTRIC EQUIPMENT TO BE MONITORED

This invention relates to a circuit arrangement for sensing, transmitting and processing information of the occurrence of a variation in a parameter of AC electric equipment to be monitored.

As is known, there exist several instances where electric facilities, such as motors, pumps, and other AC electrically operated equipment, are to be installed at remote or hard-to-reach places, such as wells or the like. Also known is that the facilities require to be monitored in order to prevent the occurrence of any sharp variations in a parameter from jeopardising the facility integrity, or damaging a machine. Such a parameter to be monitored may be, for example, the steady-state pressure or temperature of a facility which when exceeded would be an indication that some damage has or is being caused.

Remote measuring systems are known which use pulse generators and detectors connected in the power supply to facilities to be monitored and operate on RF waves, directional waves, and coded pulse transmission.

Such prior approaches involve a complex, and consequently expensive, circuitry not devoid of shortcomings. In fact, known remote measuring systems transmit the information by means of signals at a different frequency from the mains frequency, which may originate radiation of signals in the air or through wires, with the attendant risk of disturbing radio broadcasting and receiving operations. Considerable interference may be brought about, moreover, among a number of facilities to be monitored in one system, or between systems, and hence untimely operations.

Another disadvantage of known systems is that with the systems of transmission with pulses overlapping the mains waveform, it is impossible to safeguard facilities to be monitored against grounding of parts thereof under tension. This safeguard would instead be highly desirable because such failures, even if minor initially, may evolve into more serious trouble.

A further disadvantage of known systems resides in the complexity of their components, while servicing them is often hindered and in any cases fairly costly.

The aim underlying this invention is to provide a circuit arrangement of the type indicated above, which can transmit information relating to a variation in a facility parameter to be monitored to a receiver:

without radiating any high frequency signals, or disturbing radio operations,

with a passive configuration because the informational current is not required to modulate the main current and, therefore, radiates signals neither through the air or wires,

without the assistance of additional leads,

with the faculty to discriminate the actual information, i.e. relating to the variation of the parameter to be monitored, from any interference, and

with the faculty of also reporting the occurrence of ground failures in the facility to be monitored.

This circuit arrangement for sensing, transmitting, and processing information of the occurrence of a variation in a parameter of AC electric equipment to be monitored, comprises conventionally a sensor probe for sensing the parameter variations to be monitored under consideration, and is characterised, according to the invention, by that it includes:

(A) an information transmitting circuit formed of a line in the power supply network to the facility to be monitored, of the neutral and return line through the earth;

(B) a switch associated with said sensor probe and operative to establish the flowing through the information transmitting circuit of a homopolar current upon the variation in the parameter to be monitored exceeding a presettable threashold value, said switch being connected between one wire of the power supply line and the neutral ground wire;

(C) a homopolar current transducer operative to sense flowing of the same and emit a signal proportionally thereto, said transducer surrounding the wires of the power supply line;

(D) a receiver associated with said homopolar current transducer, which receiver is operative to:

(i) convert the current signal from the homopolar current transducer into a voltage signal adapted to be amplified,

(ii) amplify said voltage signal,

(iii) compare the amplified signal to a reference voltage threshold value,

(iv) recognise the informational signal, and

(v) upon recognition, issue a warning signal or command to switch the facility to be monitored off the power supply network; and

(E) an automatic power switch connected to said receiver for cutting the facility off the power supply network.

According to the invention, with the power supply network, or transformer of the same, without a neutral or with the neutral isolated, it is envisaged that an auxiliary circuit element be provided upstream of the receiver to define an artificial star centre connected to ground.

The homopolar current actuator comprises, according to the invention, a conventional sensor of the parameter to be monitored, e.g. the temperature, associated with a normally open switch connected serially to an electric component of the resistive, inductive, capacitive, or combination kind.

The homopolar current transducer consists advantageously of a core surrounding the wires of the power supply line and having a secondary circuit for sensing the homopolar current signal.

The receiver according to the invention comprises:

(i) a resistor converting the signal from the homopolar current transducer into a voltage signal adapted to be amplified;

(ii) an amplifier stage with control and amplification resistors;

(iii) a voltage threshold comparator stage with resistors for setting the cut-in threshold;

(iv) a delay stage comprised of a diode, a capacitor, resistors, and a threshold circuit; and

(v) a power relay for controlling the switch or cut-off or warning member.

The auxiliary element forming the star centre comprises advantageously three electric components consisting of resistors, inductors, capacitors, or combined components, which are connected at one end individually to the three wires of the power supply line, and at the other end are connected together and grounded.

With the proposed circuit arrangement several important advantages are secured.

Firstly, the information is issued in a reliable and timely fashion owing to this circuit being constantly ready to cut in, and to the reliable generation, or setting to flow, of the informational or homopolar current, since the same is produced forcibly upon closing a live circuit. Furthermore, this circuit arrangement utilises the same lines and leads as provided for the facility to be monitored. This system is advantageously of the passive kind, in that the informational current between the generator and receiver has an identical waveform to that absorbed by the facility, thereby it in no way modulate the main current and generates no high frequency pulses. Accordingly, the radiation is eliminated from the very beginning of signals through the air or wires. Thus, all disturbance to radio operations is avoided.

A further advantage of this circuit arrangement is that it is capable of safeguarding the facility automatically against possible grounding failures of the live parts in said facility. This safeguard is actually much sought after because such failures, even if minor initially, always evolve into more serious damage. Another advantage of this circuit arrangement is that the magnitudes of the cut-in values permit of the same to be made insensitive to any interference brought about by outside events or the cutting-in of other devices.

Still another advantage of this circuit arrangement is that the homopolar current transmitting element or actuator, provided at the facility to be monitored or close to it, contains no sophisticated and sensitive circuits, but is comprised of parts - (sensor, electric contact, passive element) of simple and reliable construction, thereby a highly reliable operation can be afforded. This is extremely important because servicing such transmitters is bound to be a complicated at costly operation. Advantageously, the receiver is also composed of constructionally simple and highly reliable behaviour components.

Furthermore, the power requirements for this circuit arrangement are quite negligible.

Further features, advantages, and details of the circuit arrangement of this invention will be apparent from the following description with reference to the accompanying drawings illustrating two preferred embodiments of the invention, and where:

Figure 1 shows the circuit arrangement of this invention in the instance of a facility powered from a three-phase AC network having a grounded neutral;

Figure 2 shows a circuit arrangement according to the invention, for a facility whose power supply network has no neutral, or an isolated or non-accessible neutral;

Figure 3 shows the receiver circuit of the proposed arrangement;

Figure 4 shows an example of a generator or actuator device for the homopolar informational current; and

Figure 5 shows an example of an auxiliary device for forming the star centre.

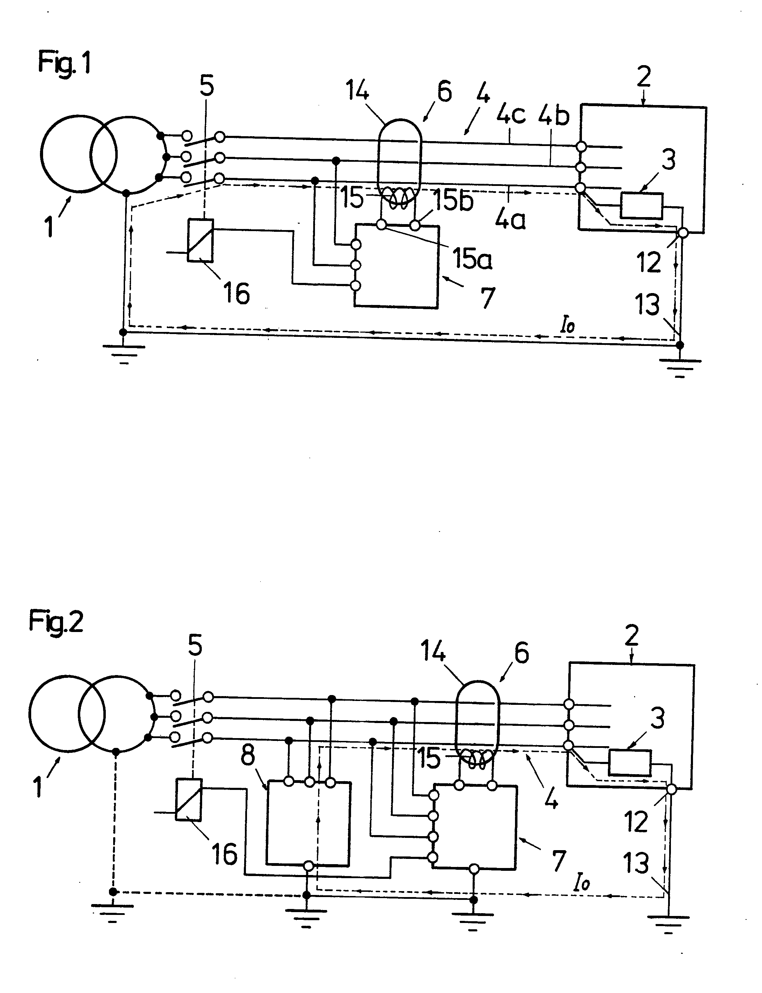

Throughout the drawing figures like parts are designated with the same reference characters. In both of the embodiments shown in Figures 1 and 2, the principle of operation of the circuit arrangement is based, according to the invention, on flowing through the same an artificial homopolar current in an AC electric facility to be monitored upon the occurrence of a variation in a parameter to be monitored, such as the temperature, which homopolar current is then picked up by a receiver which can, after checking and discriminating it, through a power relay or the like, cut off the facility being monitored from the network or generate a warning signal. The expression "homopolar current" , or "differential ground current", refers herein to that current which, instead of being closed through the various phases of AC mains, is closed through ground or earth.

In the drawing figures, the numeral 1 designates an AC power supply, 2 designates an electric facility to be monitored, such as the motor of a submerged pump in a well, and 3 designates a homopolar current generator or actuator. The latter contains a probe adapted to sense variations in a parameter being monitored, such as temperature. The generator 3 may be provided either within the facility 2 or without the facility but close to it. The three-phase power supply line is indicated at 4 and its switch at 5. The numeral 6 designates a receiver operative, following an appropriate discrimination, to convert the sensed homopolar current signals into release or warning signals. Shown at 8 in Figure 2 is also an auxiliary element for forming a star centre of ground connection, to be explained herein below.

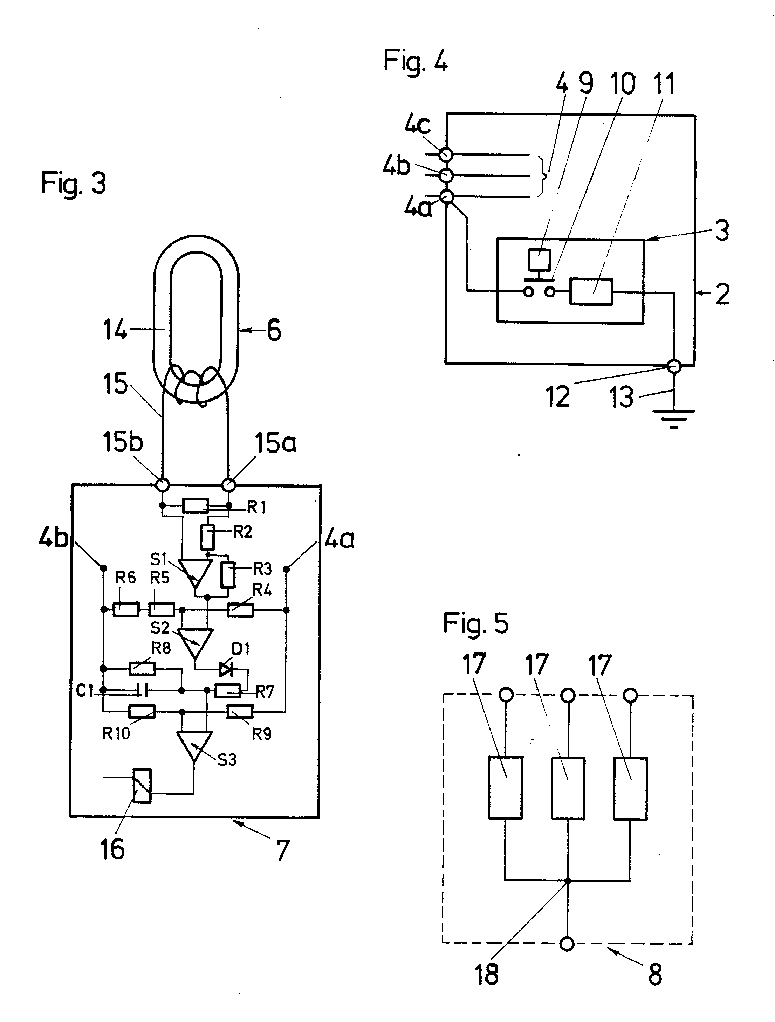

In Figure 4, the generator 3 of homopolar current comprises, in detail herein, a thermal probe 9 and a normally open switch 10 associated therewith, having an electric component 11 connected serially thereto. The same may also be either a resistor, or an inductor, or a capacitor, or a combination component. The switch 10 is connected in series between a phase-carrying wire 4a of the three-phase line 4 and a ground terminal 12. The reference numeral 13 denotes the ground connection wire. The function of the switch 10 is that of closing the circuit between the phase wire 4a and neutral wire 13 upon the probe 9 determining the closure of said switch 10 following a temperature increase within the facility 2 being monitored above a preset threshold value. With the switch 10 closed, there will be, therefore, a forced flow of homopolar current, as suitably limited by the element 11, owing to the phase 4a being grounded as shown by the dash line.

The transducer 6 for the homopolar current $I_o$ consists of closed loop magnetic core 14 having at will a circular, rectangular or other shape, through which the three phase lines 4a,4b,4c are led from the power supply network 4. The numeral 15 designates a secondary-like winding connected to the terminals 15a, 15b of the receiver 7. The latter comprises, in its preferred embodiment shown in Figure 3, a resistor R1 for converting the current signal from the transducer 6 into a suitable voltage signal for amplification, and an amplifier stage S1 with amplification control resistors R2 and R3. Indicated at S2 is a voltage threshold comparator stage comprising the resistors R4,R5 and R6 setting the the threshold of the cut-in voltage. The receiver 7 further comprises a delay stage formed of a diode D1, capacitor C1, and resistors R7,R8,R9,R10, as well as of the threshold circuit S3. Indicated at 16 is a power relay for controlling the switch 5. The function of the receiver 7 is that of amplifying the signal from the homopolar current transducer 6, comparating said signal to a reference voltage value, generated internally, checking that the signal lasts for a longer time period than that required to charge the capacitor C1, and in the affirmative, issueing the command to, or energising, the relay to open the switch 5 or to give a warning.

Prior to describing the operation of the circuit arrangement of this invention, the auxiliary element 8, shown in Figures 2 and 5 will be described briefly. The auxiliary element 8 is used with power supply networks having no neutral, or an isolated or non-accessible neutral, and in order to form an artificial grounded star centre, thus enabling also in this case the flow of a homopolar current $I_o$ as shown by the dash line in Figure 2, according to the invention. The auxiliary element 8 practically consists of three electric components 17, in the forms of resistors, inductors, capacitors, and combined types, which are connected at one end each to one phase of the network or mains 4, and at the other end, are connected together at 18 and grounded.

The operation of the circuit arrangement of this invention will be next described briefly, the parameter to be monitored being the temperature level of the facility 2. With the switch 5 closed, the facility 2 is supplied with electric power for its normal operation. In this condition, the switch 10 of the generator 3 is in the open state, thereby no homopolar current flows through the circuit arrangement. In normal operation, in fact, the currents of the phase leads 4a,4b, and 4c in the line 4 balance one another, thereby their summation is zero. In the transducer 6 no magnetomotive force is induced and accordingly, the receiver 7 receives no input signals. It stays in the normal equilibrium condition and issues no control signals to the power relay 16. On the occurrence of a temperature increase above a preset threshold value, the sensor 9 drives the switch 10 to close, and consequently, closes the homopolar current $I_o$ circuit, as shown in the drawing. The homopolar current $I_o$ alters, in fact, the equilibrium condition of the phase currents in the transducer 6 and induces, in the core 14 thereof, a magnetomotive force resulting in the creation, in the secondary circuit 15, of a proportional current to the homopolar current that, being closed through the resistor R1 of the receiver 7, supplies a voltage signal suitable for amplification. That signal is applied to the input of the amplifier stage S1, at the output whereof a similar voltage signal to the input one is obtained which has a higher value. That higher value signal is applied, in turn, to the input of the voltage comparator stage S2. Since the homopolar current $\underline{Io}$ is determined by the generator 3 or by a ground phase, the voltage signal applied to the comparator stage S2 is higher than the voltage threshold value determined by the resistors R4,R5 and R6, thereby voltage pulses will be generated at the output from this stage S2. The voltage pulses will charge the capacitor C1 of the delay stage S3 through the diode D1 and resistor R7. At the end of a set delay time period, the voltage across the capacitor C1 will exceed the voltage level provided by the resistive divider R9 and R10, thereby the threshold circuit S3 will be changed over to energise the power relay 16. The latter will control the switch 5 to open, thus breaking the power supply circuit to the facility 2, or issuing a warning signal.

In the embodiments illustrated, the receivers 7 are advantageously powered through the same line that powers the facility 2. However, that power supply could be implemented otherwise.

From the foregoing description, it appears that a circuit arrangement according to this invention affords a simple and reliable way of transmitting information between two remote locations in an electric circuit powering a facility to be monitored, without the assistance of additional leads.

It may also be appreciated from the foregoing that this circuit arrangement effectively achieves its objective and the advantages mentioned herein before.

A particular advantage resides, moreover, in the provision of the voltage comparator stage S2, as well as of the delay stage with the threshold circuit S3. In fact, the presence of the voltage threshold on the stage S2 and of the delay threshold on the stage S3 allows the receiver 7 to "discriminate" the actual temperature increase information from the generator 3, from any other occasional interference.

The circuit arrangement of this invention advantageously utilises, therefore, the principle of unbalancing the summation of the phase currents flowing through the homopolar current transducer, and is configured as a passive type in that the homopolar current that constitutes the information between the generator 3 and receiver 7 has an "identical" waveform to that of the current absorbed in the facility 2, and consequently, does not modulate the main current, or power supply current, nor generates high frequency pulses.

Differently from conventional pulse transmission systems overlapping the mains waveform, the circuit arrangement of this invention also provides, advantageously, an automatic form of safeguard against shorting live parts of the facility to ground.

This advantage is afforded in practice without any additional investment in systems and apparatus. The reliability of operation is ensured, moreover, both by the circuit-wise simplicity of the individual components and the independence of additional sophisticated circuits and the use of the same leads as provided for the power supply and ground protection.

All the individual parts may be replaced with technical and functional equivalents thereof, without departing from the protection scope of this invention.

Substantial to the invention is the use, as warning information, of a homopolar current and of a circuit arrangement utilising the same leads as the power supply network which may be a single phase one, as well as a thrre-phase one as shown. The electronic receiver shown may be replaced with other known receivers, e.g. of the electromechanical kind.

All of the features to be inferred from the specification, claims and drawings are to be regarded as substantial to this invention, either individually or in any combination thereof.

## Claims

1. A circuit arrangement for sensing, transmitting, and processing information of the occurrence of a variation in a parameter of AC electric equipment to be monitored, comprising a sensor probe for sensing said parameter variation, characterised in that it comprises:

(A) an information transmitting circuit formed of a line (4) in the power supply network to the facility (2) to be monitored, of the neutral and return line (13) through the earth;

(B) a switch (10) associated with said sensor probe (9) sensing a variation in the parameter, said switch (10) being operative to establish the flowing through the information transmitting circuit of a homopolar current ($\underline{Io}$) upon the variation in the parameter being monitored exceeding a presettable threshold value, said switch (10) being connected between one wire (4a) of the power supply line (4) and the neutral ground wire (13);

(C) a homopolar current transducer (6) operative to sense the flowing of the same and emit a signal proportionally thereto, said transducer (6) surrounding the wires of the power supply line;

(D) a receiver (7) associated with said homopolar current transducer (6), which receiver (7) is operative to:

(i) convert the signal from the homopolar current transducer (6) into a voltage signal adapted to be amplified,

(ii) amplify said voltage signal,

(iii) compare the amplified signal to a reference voltage threshold value,

(iv) check the oncoming information against any spurious signals, and

(v) upon checking the information, or recognition of the information, issue a warning signal or command to switch the facility (2) being monitored off the power supply network; and

(E) an automatic power switch (16) connected to said receiver (7) for cutting the facility (2) off the power supply network.

2. A circuit arrangement according to Claim 1, characterised in that, where the power supply network (4) or its transformer (1) lacks a neutral or has the neutral isolated, or non-accessible, upstream of the receiver (7) there is connected an auxiliary circuit element (8) adapted to define an artificial grounded star centre.

3. A circuit arrangement according to Claims 1 and 2, wherein the homopolar current actuator (3) comprises a sensor (9) sensing the parameter being monitored and being associated with a normally open switch (10) connected in series to an electric component (11) of the resistive, inductive, capacitive, or combination types.

4. A circuit arrangement according to Claims 1 and 2, wherein the homopolar current transducer - (6) comprises a core surrounding the wires - (4a,4b,4c) in the AC power supply line (4) and having a secondary circuit (15) for sensing the homopolar current signal.

5. A circuit arrangement according to one or more of the preceding claims, characterised in that the receiver (7) comprises:

(i) a resistor (R1) converting the current signal from the homopolar current transducer (6) into an amplifiable voltage signal;

(ii) an amplifier stage (S1) with amplification control resistors (R2,R3);

(iii) a voltage threshold comparator stage - (S2) with cut-in threshold setting resistors - (R4,R5,R6);

(iv) a delay stage comprising a diode (D1), a capacitor (C1) and resistors (R7,R8,R9,R10) as well as a threshold circuit (S3).

(v) a power relay (16) for controlling the switch or circuit breaking member of the power supply to the facility (2) being monitored.

6. A circuit arrangement according to Claim 2, characterised in that the auxiliary element (8) comprises three electric components (17) in the forms of resistors, inductors, capacitors, or combined components which are connected at one end each to one line wire (4a,4b,4c) and at the other end to one another (18) and grounded, said auxiliary element (8) being disposed between the receiver (7) and AC power supply (1).

7. A circuit arrangement according to Claims 1 and 2, wherein the leads (4a,4b,4c) thereof comprise leads incorporated to the power supply and protection system for the facility (2) being monitored.

8. A circuit arrangement for plural facilities (2) to be monitored, each facility (2) being associated with a branch of its own from the power supply network (4), characterised in that each branch from the power supply network (4) has a respective homopolar current generator as well as a respective transducer (6), receiver (7), and on/off switch - (5).

**Fig.1**

**Fig.2**

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PROTECTIVE RELAYS APPLICATION GUIDE, March 1975, pages 341-342, GEC Measurements, Stafford, GB. <br> * Chapter 18.2.5: "Fault throwing"; figure 18.8 * | 1,3 | H 02 H 3/02 <br> H 02 H 3/33 |
| | --- | | |
| Y | GB-A-2 010 496 (WESTINGHOUSE) <br> * Figure 1; abstract * | 1,3 | |
| | --- | | |
| Y | FR-A-2 440 609 (MERLIN GERIN) <br> * Page 2, lines 1-23; figure 2 * | 1,3 | |
| | --- | | |
| A | DE-A-2 740 744 (SIEMENS) <br> * Whole document * | 1,3 | |
| | ----- | | **TECHNICAL FIELDS SEARCHED (Int. Cl.4)** <br><br> H 02 H <br> H 01 H |

The present search report has been drawn up for all claims

| Place of search | Date of completion of the search | Examiner |
|---|---|---|
| THE HAGUE | 15-05-1986 | KOLBE W.H. |